# EUROPEAN PATENT APPLICATION

(11) **EP 4 811 113 A1**
(43) Date of publication of application: **23.09.2026**
(21) Application number: 25164696.4
(22) Date of filing: 19.03.2025
(51) Int. Cl.: G06F 8/34, G06F 8/73, G06F 8/75, G06N 5/02, G05B 19/042, G06F 11/32

(54) **METHOD AND SYSTEM FOR GENERATING A LAYOUT OF AN ENGINEERING PROJECT BY IDENTIFYING A CONTROL MODULE FROM AN AUTOMATION CODE**

(71) Applicant: Siemens Aktiengesellschaft, 80333 München (DE)
(72) Inventor: Thiagaraja, Sezhiyan, 560102 Bangalore, Karnataka (IN); Witte, Martin, 91126 Schwabach (DE)
(74) Representative: Isarpatent

(57) **Abstract**

A method for generating a layout of an engineering project (102) is disclosed. The method involves analyzing the automation code (108) to identify coding standards and creating a knowledge graph representation using an automation ontology that defines entities (104a-104n), relationships, and industry standards. The coding standards of the automation code (108) are mapped to predefined industry standards associated with the engineering project (102). An extraction code block is created and executed on the knowledge graph representation to extract entities (104a-104n). Control modules (114a-114n) are identified and created for each entity (104a-104n) based on elements of the automation code (108). A digital layout of the engineering project (102) is then generated, defining the entities (104a-104n), control modules (114a-114n), and their relationships. This method enables automatic layout generation directly from the automation code (108), facilitating efficient upgrades to brownfield engineering projects (102).

## Description

The present disclosure relates to generating layout of an engineering project, and more particularly relates to a method and system for automatically generating a layout of an engineering project by identifying a control module from automation code.

It is well known that modern industries are equipped with industrial automation systems for better control and automation of the processes within the industries. However, the relationship between the industrial automation systems and the engineering project such as industrial site is crucial for the efficient operation of the site. The industrial automation systems such as Supervisory Control and Data Acquisition (SCADA) acts as the control and monitoring backbone for the industrial site, ensuring that operations run smoothly, efficiently, and with minimal human intervention.

Control software, Supervisory Control and Data Acquisition (SCADA), and visualization software, such as embedded software, Programmable Logic Controller (PLC) automation software, or Human-Machine Interface (HMI) software associated with the industrial automation platform, are structurally and semantically connected to the manufacturing plants or their assets. These control and visualization software tools assist in managing and visualizing the assets within the industrial site. Furthermore, the control and visualization software may include code structures that define the organization of the code and the design of the assets within the industrial site, ensuring interaction between the assets. These code structures directly relate to the physical components or operations of the industrial site. In other words, the organization and structure of the control and visualization software reflect the underlying processes and machinery they control, and the data they present correspond to real-world system states and operations.

Several key problems arise in this context. First, there is the challenge of managing these relationships consistently. Second, the automation of the generation and updating of these relationships is complex. Lastly, there is the feasibility of effectively utilizing these relationships for IT-based services.

A potential solution to these challenges involves generating a manufacturing plant layout from its corresponding automation code, effectively a reverse engineering activity, particularly relevant for brownfield scenarios. The generated plant layout would explicitly include entries corresponding to field-level artifacts, such as machines, lines, and devices, as reflected in the automation code. However, an explicit "Control module" at the controller level is often absent in the generated plant layout.

For instance, in the ISA-95 standard, various levels of manufacturing operations and control are detailed. "Level 1" within this standard refers to the "Control level," which is not explicitly defined in a typical automation code. Addressing this gap is crucial for the development of comprehensive and functional models that accurately represent both field and control levels within the engineering project.

Therefore, it is an object of the present invention to provide a computer-implemented method, apparatus, and system for automatically generating a layout of an engineering project by identifying a control module from automation code.

The term "engineering project" refers to any industrial system, manufacturing system, or similar undertaking that involves the design, development, implementation, or optimization of technical and engineering solutions to address specific objectives. An engineering project may include hardware equipment such as motors, robots, logical controllers, human machine interfaces, conveyor belts, and machine lathes. Further, the engineering project may comprise sensors and other sensory devices configured to measure operational parameters of the processes of the engineering project. As an example, an engineering project may be a cement manufacturing plant, glass manufacturing plant, so on and so forth.

The term "coding standards" used herein refers to a set of standardized rules and guidelines for writing codes or programming scripts in a consistent manner. The coding standards may include naming rules for variables, functions, and blocks in control programs (such as those in PLC or SCADA systems). The coding standards may also include structural rules covering various aspects of code structure, such as indentation, file organization, naming conventions, and modularization. The coding standards may also include library standards defining how software libraries should be created, organized, and used.

The term "entities" or "one or more entities" may refer to any device, system, instrument, or machinery manufactured or used in an industry that may be employed for performing an operation. In some cases, entities may also include any devices or instruments deployed or functioning in a non-industrial environment such as buildings. Examples of entities include any machinery in the industrial site or technical installation/facility such as motors, gears, bearings, shafts, switchgear, rotors, circuit breakers, protection devices, remote terminal units, transformers, reactors, disconnectors, gear-drive, gradient coils, magnet, chillers, radio frequency coils, appliances, electronic devices, chillers, pumps, heat exchangers, cooling towers, air compressors, boilers, fluid bed driers, coating machines, carbonation towers etc.

The term "automation ontology" may refer to a detailed structured representation of the entities and operations within the industrial site, including buildings, equipment, processes, safety protocols, utility systems, and the relationships between them. The automation ontology may indicate the structured hierarchy of the engineering project and may be created based on the automation code and one or more predefined standards. The automation ontology may provide a layered view of the entities of the engineering project.

The term "knowledge graph" as used herein refers to a heterogeneous database comprising information pertaining to the engineering project and the entities. The knowledge graph is a centralized repository or database that contains entity-specific information, process-specific information, sensor-specific information, etc. The knowledge graph also contains information relevant to the specific industry, sector, or domain in which the organization operates. This may include technical specifications, manufacturing processes, equipment manuals, safety procedures, regulatory requirements, and industry standards. The knowledge graph also comprises information extracted from documentation of routine activities at the engineering project, one or more entities located at the industrial site, performance parameters, efficiency parameters, drifts, anomalies, root cause analysis, prediction, resolution anomalies, etc. The knowledge graph also comprises information on the engineering project and its entities in a hierarchical manner. The knowledge graph also comprises images, videos, audio, etc. having information on the engineering project.

It is an object of the present invention to provide a computer-implemented method, for automatically generating a layout of an engineering project by identifying a control module from automation code.

The method comprises analyzing, by a processing unit, the automation code of an engineering project to identify the associated coding standard. In an embodiment, the semantics and structure of the automation code is analyzed by the processing unit to identify the coding standard to which the automation code adheres.

In an embodiment, the coding standard includes a set of rules and naming conventions for different entities of the engineering project represented in the automation code.

The method comprises creating, by the processing unit, a knowledge graph representation of the automation code, which defines the relationships between multiple entities of the project using an automation ontology that includes predefined industry standards. The automation ontology comprises information about the industry standards associated with the engineering project, this information is used to create the knowledge graph representation of the automation code.

In an embodiment, the knowledge graph representation of the automation code comprises nodes representing different entities of the engineering project and edges representing the relationships between the different entities of the engineering project.

The method comprises mapping, by the processing unit, the coding standards of the automation code of the engineering project with the predefined industry standards associated with the engineering project.

In an embodiment, the predefined industry standards are obtained from a data source comprising documentation defining rules and regulations for the engineering project.

The method comprises creating an extraction code block, using the processing unit, for the engineering project, based on the mapping of the coding standards of the automation code with the predefined industry standards.

In an embodiment, the extraction code block defines the entities of the engineering project to be extracted from the automation code.

In an embodiment, the extraction code block comprises computer-executable query, that when executed extracts the desired entities of the engineering project from the automation code.

The method comprises executing, by the processing unit, the extraction code block on the knowledge graph representation of the automation code.

The method comprises extracting, by the processing unit, entities of the engineering project from the knowledge graph representation of the automation code based on the execution of the extraction code block on the knowledge graph representation.

The method comprises identifying, by the processing unit, a plurality of elements of the control modules associated with each of the entities of the engineering project from the automation code.

The method comprises creating, by the processing unit, the control module for each of the entities of the engineering project based on the identified elements of the control modules corresponding to the entities of the engineering project.

The method comprises generating, by the processing unit, a layout of the engineering project, wherein the layout is a digital representation of the engineering project defining the entities of the engineering project, control modules associated with each of the entities, and relationship between each of the entities based on the identification of the entities and the control module from the automation code of the engineering project thereby automatically generating the layout of the engineering project from the automation code for upgradation of brownfield engineering project.

The method comprises classifying, by the processing unit, the entities of the engineering project that are extracted from the automation code based on the coding standard of the automation code.

It is an object of the present invention to provide an apparatus for generating a layout of an engineering project by identifying a control module from automation code. The apparatus comprises one or more processing units, and a memory communicatively coupled to the one or more processing units. The memory comprises a module stored in the form of machine-readable instructions executable by the one or more processing units, wherein the module is configured to perform the method steps as stated above.

It is an object of the present invention to provide a system for generating a layout of an engineering project by identifying a control module from automation code. The system comprises the engineering project comprising a plurality of entities, and the apparatus for identifying the control module of an engineering project from automation code associated with the engineering project.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system 100 for identifying a control module 114 of an engineering project 102 from automation code 108 associated with the engineering project 102, in accordance with an embodiment of the present invention;
- FIG 2: illustrates a block diagram of the apparatus 112 for identifying a control module 114 of an engineering project 102 from automation code 108, in accordance with an embodiment of the present invention; and
- FIG 3: is a flowchart 300 of a method for generating a layout of an engineering project 102 by identifying a control module 114 from an automation code (108), in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

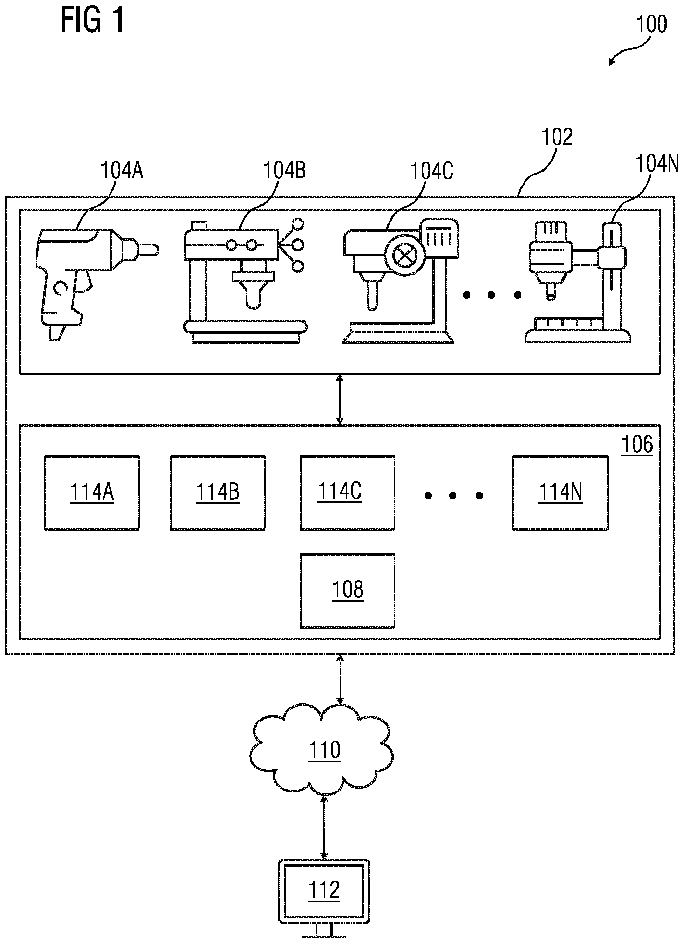

FIG. 1 illustrates a system 100 for identifying a control module 114 of an engineering project 102 from automation code 108 associated with the engineering project 102, in accordance with an embodiment of the present invention. The system 100 comprises an engineering project 102, an automation platform 106 operably connected to the entities (104a-104n) of the engineering project 102, an apparatus 112 for identifying a control module 114 of an engineering project 102 from automation code 108, and a communication network 110.

The engineering project 102 further comprises a plurality of entities (104a-104n). The entities (104a-104n) may include machineries, conveyors, machine tools, or any device, system, instrument, or machinery manufactured or used in an industry.

The automation platform 106 further comprises a plurality of control modules (114a-114n), and an automation code 108. The plurality of control modules (114a-114n) is operably connected to the entities (104a-104n). The control module 114 may refer to modular unit designed to manage, regulate, and monitor the operation of entities (104a-104n) in the engineering project 102. The control module 114 may comprise a combination of hardware and software components that collectively enable it to perform defined control functions.

The automation code 108 when executed enables the automation platform 106 to control the entities (104a-104n) of the engineering project 102 via the control modules (114a-114n).

In an embodiment, the automation platform 106 comprises at least one of PLC, Panel, Industrial Information Hub (IIH) Edge data services, and SCADA systems.

The communication network 110 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

The apparatus 112 is configured to obtain the automation code 108 of the brownfield engineering project 102 and process the automation code 108 to identify the entities (104a-104n) and the control modules (114a-114n) of the engineering project 102. Further, the apparatus 112 generates a layout of the engineering project 102 using the automation code 108 based on the identified entities (104a-104n) and control modules (114a-114n). This layout of the brownfield engineering project 102 may further be used to upgrade the brownfield engineering project 102.

In an embodiment, the layout may be a digital representation of the engineering project 102 illustrating the classification of the one or more entities (104a-104n) based on the one or more coding standards, and the relationship between each of the entities (104a-104n) and the control module. For example, the one or more entities (104a-104n) may be classified based on functional type.

Advantageously, the classification of the one or more entities (104a-104n) based on the one or more coding standards optimizes asset management, streamline operations of the one or more entities (104a-104n), and improves maintenance workflows.

Additionally, the layout may indicate relationships between the one or more entities (104a-104n) and the control module 114 within the automation platform 106. For example, the layout may indicate that the control module 114 controls the operation of the entity.

The layout may also depict the interconnections between the one or more entities (104a-104n) within the engineering project 102. For example, the layout may depict that the entity is interconnected with another entity.

In an advantageous aspect, the layout provides a representation capturing the structure, processes, systems, and the one or more entities (104a-104n) within the engineering project 102, thereby allowing for effective management, analysis, and optimization of operations within the engineering project 102.

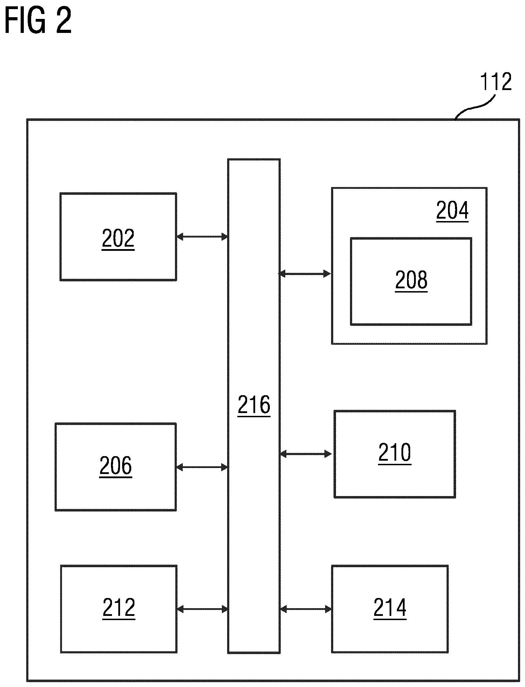

FIG. 2 illustrates a block diagram of the apparatus 112 for identifying a control module 114 of an engineering project 102 from automation code 108, in accordance with an embodiment of the present invention.

The apparatus 112 comprises a processing unit 202, a memory, a database 206, a network interface 210, an input unit 212, an output unit 214, and a bus 216.

The memory may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include a module 208 stored in the form of machine-readable instructions executable by the one or more processing unit 202. The memory 204 may include multiple modules 208, wherein the modules, when executed, identifies the control modules (114a-114n) of the engineering project 102 from the automation code 108, and generates a layout of the engineering project 102 from the automation code 108.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as the operations required for generating recommendations for optimizing a process. The database 206 may store historical data of operational parameters comprising control variables and critical parameters associated with the process in the form of tables or structured knowledge graphs and that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database is configured to access the memory; and one or more program module, applications, engines, managers, computer-executable code, scripts, or the like such as, for example, the various modules of the memory. Any of the components depicted as being stored in the database may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202 , a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202 is configured to analyze the automation code 108 of the engineering project 102 to identify a coding standard associated with the automation code 108. Further, the processing unit 202 creates a knowledge graph representation of the automation code 108 defining relationship between multiple entities (104a-104n) of the engineering project 102. The knowledge graph representation is created using an automation ontology defining multiple entities (104a-104n) of the engineering project 102, relationship between the entities (104a-104n), and predefined industry standards associated with the engineering project 102.

The processing unit 202 further creates an extraction code block for the engineering project 102, based on the mapping of the coding standards of the automation code 108 with the predefined industry standards.

The processing unit 202 executes the extraction code block on the knowledge graph representation of the automation code 108 to extract the entities (104a-104n) of the engineering project 102 from the knowledge graph representation of the automation code 108.

The processing unit 202 identifies a plurality of elements of the control modules (114a-114n) associated with each of the entities (104a-104n) of the engineering project 102 from the automation code 108.

The processing unit 202 creates the control module 114 for each of the entities (104a-104n) of the engineering project 102 based on the identified elements of the control modules (114a-114n) corresponding to the entities (104a-104n) of the engineering project 102.

The processing unit 202 generates a layout of the engineering project 102 based on the identified entities (104a-104n) and the control modules (114a-114n). Thus, the processing unit 202 utilizes the automation code 108 of a brownfield engineering project 102 to generate a layout of the engineering project 102 for easier upgradation of the brownfield engineering project 102.

The input unit 212 and the output unit 214 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 210 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 216 may include at least one of a system 100 bus, a memory bus, an address bus, or a message bus, and may permit the exchange of information (e.g., data (including computer-executable code), signaling, etc.) between various components of the apparatus 112. The bus may include, without limitation, a memory bus or a memory controller, a peripheral bus, an accelerated graphics port, and so forth.

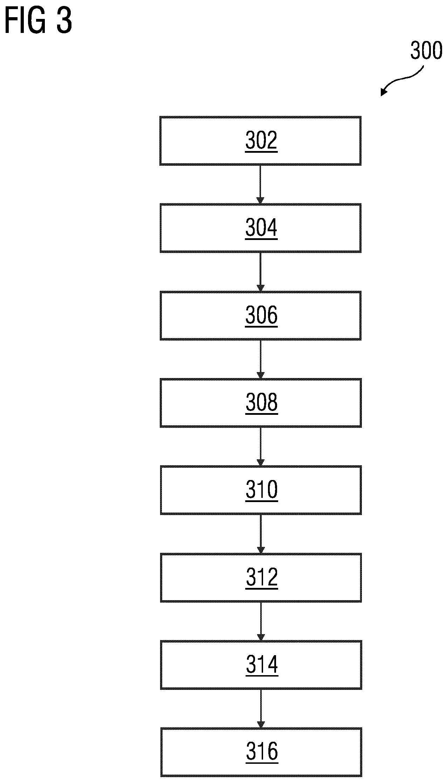

FIG. 3 is a flowchart 300 of a method for generating a layout of an engineering project 102 by identifying a control module 114 from an automation code 108, in accordance with an embodiment of the present invention.

At step 302, the processing unit 202 analyzes the automation code 108 of the engineering project 102 to identify a coding standard associated with the automation code 108.

In an embodiment, the coding standard includes a set of rules and naming conventions for different entities (104a-104n) of the engineering project 102 that are represented in the automation code 108.

As an example, if the one or more coding conventions use a naming rule for workstations like "ST_01", wherein "ST" would represent "station" and "01" would represent "ID number of the station". Likewise, for equipment, the naming rule may be "IR_001", wherein "IR" would represent "equipment" and "001" would represent "ID number of the equipment".

The one or more coding standards beneficially establish standardized rules for naming, categorizing, and organizing the entities (104a-104n), thereby enhancing the management and operational efficiency of the engineering project 102.

At step 304, the processing unit 202 creates a knowledge graph representation of the automation code 108 defining relationship between multiple entities (104a-104n) of the engineering project 102. The knowledge graph representation is created using an automation ontology defining multiple entities (104a-104n) of the engineering project 102, relationship between the entities (104a-104n), and predefined industry standards associated with the engineering project 102.

In an embodiment, the knowledge graph representation of the automation code 108 comprises nodes representing the different entities (104a-104n) of the engineering project 102, and edges representing the relationship between the different entities (104a-104n) of the engineering project 102.

In an embodiment, the predefined industry standards are obtained from a data source comprising documentation defining rules and regulations for the engineering project 102. In an embodiment, the predefined standards may include ISA-88 (Batch Control Standard), ISA-95 (Enterprise-Control System Integration Standard), and similar standards.

To build a knowledge graph using automation ontology, the ontology first establishes the formal definitions of key domain-specific entities (104a-104n), such as sensors, actuators, programmable logic controllers (PLCs), robots, machines, production lines, and processes. It also specifies their properties, such as data types, operational parameters, physical locations, and functional roles, as well as the relationships between these entities (104a-104n), such as dependencies, part-whole hierarchies, communication links, and process flows. These definitions are encoded using semantic web technologies like RDF (Resource Description Framework) and OWL (Web Ontology Language), ensuring the graph is both machine-interpretable and extensible.

In an embodiment, the automation ontology may be ISA-88, ISA-95, an OPC-UA machine standard or any other standard as desired.

At step 306, the processing unit 202 maps the coding standards of the automation code 108 of the engineering project 102 with the predefined industry standards associated with the engineering project 102. In other words, the naming rules, structural rules, or library conventions of the automation code 108 is mapped to the predefined industry standards such as ISA-88 and ISA-95 standards.

At step 308, the processing unit 202 creates an extraction code block for the engineering project 102, based on the mapping of the coding standards of the automation code 108 with the predefined industry standards.

In an embodiment, the extraction code block defines the entities (104a-104n) of the engineering project 102 to be extracted from the automation code 108.

In an embodiment, the extraction code block comprises computer-executable query, that when executed extracts the desired entities (104a-104n) of the engineering project 102 from the automation code 108.

The extraction code block may comprise the definitions of the entities (104a-104n) of the engineering project 102, and the elements of the control modules (114a-114n) to be extracted. The entities (104a-104n) may be defined in the extraction code based on the naming conventions, and coding standards used in the automation code 108.

The elements of the control module 114 such as PLC, HMI, and Hardware components may be defined in the extraction code block so that the elements of the control module 114 are extracted from the knowledge graph.

The extraction block may further define the sub-elements of the elements of the control module. As an example, the element PLC may have sub-elements such as Tags, Function Blocks, and Databases. Further, HMI may have sub-elements such as Screens, Tags, and Alarms. Furthermore, hardware components may include sub-elements such as I/O devices, actuators, and sensors.

At step 310, the processing unit 202 executes the extraction code block on the knowledge graph representation of the automation code 108.

In an embodiment, the extraction code block may comprise queries written in a querying language suitable for querying knowledge graphs. As an example, the queries in the extraction code block may be written in SPARQL language.

At step 312, the processing unit 202 extracts the entities (104a-104n) of the engineering project 102 from the knowledge graph representation of the automation code 108 based on the execution of the extraction code block on the knowledge graph representation.

Upon execution of the extraction code block, the entities (104a-104n) of the engineering project 102 is extracted from the automation code 108. Advantageously, for a brownfield engineering project 102, without a need for an expert who commissioned the engineering project 102, the entities (104a-104n) of the engineering project 102 are extracted.

In an embodiment, the method comprises a step of classifying, by the processing unit 202, the entities (104a-104n) of the engineering project 102 that are extracted from the automation code 108 based on the coding standard of the automation code 108.

As an example, the entities (104a-104n) that are extracted may be classified based on hierarchy (e.g., asset level 1, asset level 2, etc.), functional type (e.g., process assets, control assets, support assets, safety assets, etc.), or location (e.g., building/area, zone, etc.).

At step 314, the processing unit 202 identifies a plurality of elements of the control modules (114a-114n) associated with each of the entities (104a-104n) of the engineering project 102 from the automation code 108.

The processing unit 202, upon executing the extraction code block, identifies the elements of the control modules (114a-114n). For each entity, the extraction code block identifies the elements of the control modules (114a-114n) and sub-elements of each of the elements. Therefore, for a specific entity like combustion chamber, the control modules (114a-114n) such as PLC, HMI, and hardware components associated with the combustion chamber is identified.

At step 316, the processing unit 202 creates the control module 114 for each of the entities (104a-104n) of the engineering project 102 based on the identified elements of the control modules (114a-114n) corresponding to the entities (104a-104n) of the engineering project 102.

The elements and sub-elements of the control modules (114a-114n) corresponding to an entity is used to create the control module 114 for the entity. Thus, the control modules (114a-114n) corresponding to all the entities (104a-104n) of the engineering project 102 is obtained by the processing unit 202.

At step 318, the processing unit 202 generates a layout of the engineering project 102 based on the identified entities (104a-104n) and the control modules (114a-114n). The layout is a digital representation of the engineering project 102. The layout defines the entities (104a-104n) of the engineering project 102, control modules (114a-114n) associated with each of the entities (104a-104n), and the relationship between each of the entities (104a-104n) and its corresponding control module.

Advantageously, in the proposed method, the layout of the engineering project 102 is automatically generated from the automation code 108 of the engineering project 102.

Advantageously, identification of Control module 114 enhances the conceptual understanding of an engineering project 102 and its intricate relationship with the automation code 108. The proposed method simplifies the process for extending the manufacturing facilities and incorporate additional features, fostering scalability and adaptability within the engineering project 102.

Advantageously, the identified control modules (114a-114n) can be seamlessly integrated with automated inspection and testing systems to enable the early detection of product flaws during the production process. This proactive approach reduces the risk of defective products reaching the market, ensuring consistent product quality and safeguarding the reputation of the manufacturer. The early identification of issues also minimizes waste, optimizes production efficiency, and reduces overall costs associated with defect management.

Advantageously, the proposed method facilitates intuitive decision-making when modifying or extending the engineering project 102. It is used to determine which part of the automation code 108 requires changes to accommodate plant modifications and, conversely, understand how alterations to the code impact the plant. This bidirectional clarity streamlines the adaptation process, reduces complexity, and ensures that customers can make precise, informed decisions to meet evolving requirements.

Advantageously, the framework creates a contextual understanding of data points and operations within the engineering project 102. It establishes relationships between devices, their locations within the plant structure, and their associated data points and operations. This contextualization enhances the ability to manage and interpret plant operations, enabling efficient troubleshooting, optimizing workflows, and supporting informed decision-making for improved plant performance.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for identifying a control module of an engineering project from automation code associated with the engineering project
102 - Engineering project
104a -104n - Entities
106 - Automation platform
108 - Automation code
110 - Communication network
112 - Apparatus
114a-114b - Control modules
202 - Processing unit
204 - Memory
206 - Database
208 - Modules
210 - Network interface
212 - Input unit
214 - Output unit
216 - Bus
300 - flowchart of a method for generating a layout of an engineering project by identifying a control module from an automation code

## Claims

1. A computer-implemented method for generating a layout of an engineering project (102) by identifying a control module (114a-114n) from an automation code (108), wherein the method comprises:
analyzing, by a processing unit (202), the automation code (108) of the engineering project (102) to identify a coding standard associated with the automation code (108);
creating, by the processing unit (202), a knowledge graph representation of the automation code (108) defining relationship between multiple entities (104a-104n) of the engineering project (102), wherein the knowledge graph representation is created using an automation ontology defining multiple entities (104a-104n) of the engineering project (102), relationship between the entities (104a-104n), and
predefined industry standards associated with the engineering project (102);
mapping, by the processing unit (202), the coding standards of the automation code (108) of the engineering project (102) with the predefined industry standards associated with the engineering project (102);
creating an extraction code block, using the processing unit (202), for the engineering project (102), based on the mapping of the coding standards of the automation code (108) with the predefined industry standards;
executing, by the processing unit (202), the extraction code block on the knowledge graph representation of the automation code (108);
extracting, by the processing unit (202), entities (104a-104n) of the engineering project (102) from the knowledge graph representation of the automation code (108) based on the execution of the extraction code block on the knowledge graph representation;
identifying, by the processing unit (202), a plurality of elements of the control modules (114a-114n) associated with each of the entities (104a-104n) of the engineering project (102) from the automation code (108);
creating, by the processing unit (202), the control module (114a-114n)for each of the entities (104a-104n) of the engineering project (102) based on the identified elements of the control modules (114a-114n) corresponding to the entities (104a-104n) of the engineering project (102); and
generating, by the processing unit (202), a layout of the engineering project (102) based on the identified entities (104a-104n) and the control modules (114a-114n),
wherein:
the layout is a digital representation of the engineering project (102) defining the entities (104a-104n) of the engineering project (102), control modules (114a-114n) associated with each of the entities (104a-104n), and the relationship between each of the entities (104a-104n) and the control module (114a-114n)identified from the automation code (108) of the engineering project (102) thereby automatically generating the layout of the engineering project (102) from the automation code (108) for upgradation of brownfield engineering project (102).

2. The method according to claim 1, wherein the extraction code block defines the entities (104a-104n) of the engineering project (102) to be extracted from the automation code (108).

3. The method according to claim any of the preceding claims, wherein the extraction code block comprises computer-executable query, that when executed extracts the desired entities (104a-104n) of the engineering project (102) from the automation code (108).

4. The method according to any of the preceding claims, wherein the coding standard includes a set of rules and naming conventions for different entities (104a-104n) of the engineering project (102) that are represented in the automation code (108).

5. The method according to any of the preceding claims, wherein the predefined industry standards are obtained from a data source comprising documentation defining rules and regulations for the engineering project (102).

6. The method according to any of the preceding claims, wherein the method comprises:
classifying, by the processing unit (202), the entities (104a-104n) of the engineering project (102) that are extracted from the automation code (108) based on the coding standard of the automation code (108).

7. The method according to any of the preceding claims, wherein the knowledge graph representation of the automation code (108) comprises nodes representing the different entities (104a-104n) of the engineering project (102), and edges representing the relationship between the different entities (104a-104n) of the engineering project (102).

8. An apparatus for identifying a control module (114a-114n) of an engineering project (102) from an automation code (108) associated with the engineering project (102), wherein the apparatus comprises:
one or more processing units (202); and
a memory (204) communicatively coupled to the one or more processing units (202), the memory (204) comprising a module (208) stored in the form of machine-readable instructions executable by the one or more processing units (202),
wherein the module (208) is configured to perform the method steps according to claims 1 to 7.

9. A system (100) for identifying a control module (114a-114n) of an engineering project (102) from automation code (108) associated with the engineering project (102), wherein the system (100) comprises:
the engineering project (102) comprising a plurality of entities (104a-104n);
an automation platform (106) operably connected to the entities (104a-104n) of the engineering project (102), wherein the automation platform (106) comprises an automation code (108), which when executed enables the automation platform (106) to control the entities (104a-104n) of the engineering project (102); and
the apparatus for identifying the control module (114a-114n) of an engineering project (102) from the automation code (108) associated with the engineering project (102) according to claim 8.

10. A computer-program product, having computer-readable instructions stored therein, that when executed by a processing unit (202), cause the processing unit (202) to perform method steps according to any of the claims 1 to 7.

11. A computer readable medium on which program code sections of a computer program are saved, the program code sections being loadable into and/or executable in a system to make the system execute the method steps according to any of the claims 1 to 7 when the program code sections are executed in the system.
